# EUROPEAN PATENT APPLICATION

(11) **EP 4 773 717 A1**
(43) Date of publication of application: **08.07.2026**
(21) Application number: 24860346.6
(22) Date of filing: 26.08.2024
(51) Int. Cl.: H04W 74/0816, H04W 74/00, H04L 5/00, H04W 72/0453, H04W 84/12, H04W 24/08

(54) **COMMUNICATION METHOD AND APPARATUS USING SUBCHANNEL IN WIRELESS LAN**

(30) Priority: 29.08.2023 KR 20230113925
(71) Applicant: Hyundai Motor Company, Seoul 06797 (KR); Kia Corporation, Seoul 06797 (KR); KOREA NATIONAL UNIVERSITY OF TRANSPORTATION INDUSTRY-ACADEMIC COOPERATION FOUNDATION, Chungju-si, Chungcheongbuk-do 27469 (KR)
(72) Inventor: KIM, Yong Ho, Incheon 22003 (KR); MOON, Ju Seong, Osan-si Gyeonggi-do 18101 (KR)
(74) Representative: Isarpatent
(86) International application number: PCT/KR2024/012682
(87) International publication number: WO 2025/048426

(57) **Abstract**

In order to perform communication using a subchannel in a wireless LAN system, a method for operating an access point (AP) comprises detecting that a device other than at least one station (STA) associated with the AP is performing communication on a primary channel, obtaining information related to a time duration during which the communication is performed, switching an operating channel from the primary channel to at least one subchannel during the time duration, transmitting or receiving data on the subchannel, and switching the operating channel to the primary channel.

## Description

### Technical Field

The present invention relates to a wireless local area network (WLAN) system, and more particularly, to a communication method and device using a subchannel in a wireless LAN system.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

As applications requiring higher throughput and applications requiring real-time transmission occur, an expanded frequency bandwidth and/or an efficient retransmitting operation may be supported in a WLAN. In addition, an operation of simultaneously using multiple links or links may be supported.

Meanwhile, the technologies that are described in the Background section are written to improve the understanding of the background of the present disclosure and may include content that is not already known to those of ordinary skill in the art to which the present disclosure belongs.

### Disclosure

### Technical Problem

The present disclosure provides a method and device for performing communication using a primary channel and a subchannel in a wireless local area network (WLAN) system.

The present disclosure provides a method and device for performing channel detection on a primary channel and performing communication based on a channel detection result in a WLAN system.

The present disclosure provides a method and device for performing communication using a subchannel when a primary channel is used by another device in a WLAN system.

The present disclosure provides a method and device for performing communication using a subchannel when whether to use a primary channel varies between wireless LAN devices in a wireless LAN system.

The present disclosure provides a method and device for performing communication when some subchannels cannot be used in a wireless LAN system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

According to an embodiment of the present disclosure, a method for operating an access point (AP) in a wireless LAN system comprises detecting that a device other than at least one station (STA) associated with the AP is performing communication on a primary channel, obtaining information related to a time duration during which the communication is performed, switching an operating channel from the primary channel to at least one subchannel during the time duration, transmitting or receiving data on the subchannel, and switching the operating channel to the primary channel.

According to an embodiment of the present disclosure, a method for operating a station (STA) in a wireless LAN system comprises detecting that a device other than an access point (AP) associated with the STA is performing communication on a primary channel, obtaining information related to a time duration during which the communication is performed, switching an operating channel from the primary channel to at least one subchannel during the time duration, transmitting or receiving data on the subchannel, and switching the operating channel to the primary channel.

According to an embodiment of the present disclosure, an access point (AP) in a wireless LAN system comprises a transceiver and a processor connected to the transceiver. The processor is configured to detect that a device other than at least one STA (station) associated with the AP is performing communication on a primary channel, obtain information related to a time duration during which the communication is performed, switch an operating channel from the primary channel to at least one subchannel during the time duration, transmit or receiving data on the subchannel and switch the operating channel to the primary channel.

According to an embodiment of the present disclosure, a station (STA) in a wireless LAN system comprises a transceiver and a processor connected to the transceiver. The processor is configured to detect that a device other than an access point (AP) associated with the STA is performing communication on a primary channel, obtain information related to a time duration during which the communication is performed, switch an operating channel from the primary channel to at least one subchannel during the time duration, transmit or receiving data on the subchannel and switch the operating channel to the primary channel.

### Advantageous Effects

According to the present disclosure, when a primary channel is busy in a wireless LAN system, communication can be performed on a subchannel.

According to the present disclosure, communication can be performed on a subchannel based on the amount of energy detected on a primary channel in a wireless LAN system.

According to the present disclosure, communication using a subchannel can be performed efficiently in a wireless LAN system.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

FIG. 1 is a block diagram illustrating a first embodiment of a communication node constituting a wireless local area network system.
FIG. 2 illustrates a first embodiment of a communication method using a subchannel of a wireless LAN terminal.
FIG. 3 illustrates a second embodiment of a communication method using a subchannel of a wireless LAN terminal.
FIG. 4 illustrates a third embodiment of a communication method using a subchannel of a wireless LAN terminal.
FIG. 5 illustrates a fourth embodiment of a communication method using a subchannel of a wireless LAN terminal.
FIG. 6 illustrates a fifth embodiment of a communication method using a subchannel of a wireless LAN terminal.
FIG. 7 illustrates a sixth embodiment of a communication method using a subchannel of a wireless LAN terminal.
FIG. 8 illustrates a flowchart of a procedure for a STA (station) to perform communication using a subchannel according to one embodiment of the present disclosure.
FIG. 9 illustrates a flowchart of a procedure for an AP (access point) to perform communication using a subchannel according to one embodiment of the present disclosure.

### Mode for Invention

Hereinafter, embodiments of a method for wireless LAN devices to perform communication using a subchannel will be described with reference to drawings. The wireless LAN devices include an access point (AP) and a station (STA). The wireless LAN devices may be referred to as wireless LAN terminals. Alternatively, wireless LAN terminals may refer to wireless LAN devices other than the AP. The wireless LAN devices may perform communication using a subchannel when communication cannot be performed on a primary channel. For example, if other devices perform communication on the primary channel, interference may occur in the communication of the wireless LAN devices. According to one embodiment of the present disclosure, communication can be performed using a subchannel even when other devices perform communication on the primary channel. The bandwidths of the primary channel and the subchannel may be the same. Alternatively, the bandwidths of the primary channel and the subchannel may be different from each other. To perform communication, the AP and the STA may detect communication of other devices on the primary channel. Hereinafter, the subchannel may be referred to as an auxiliary primary channel or an auxiliary channel.

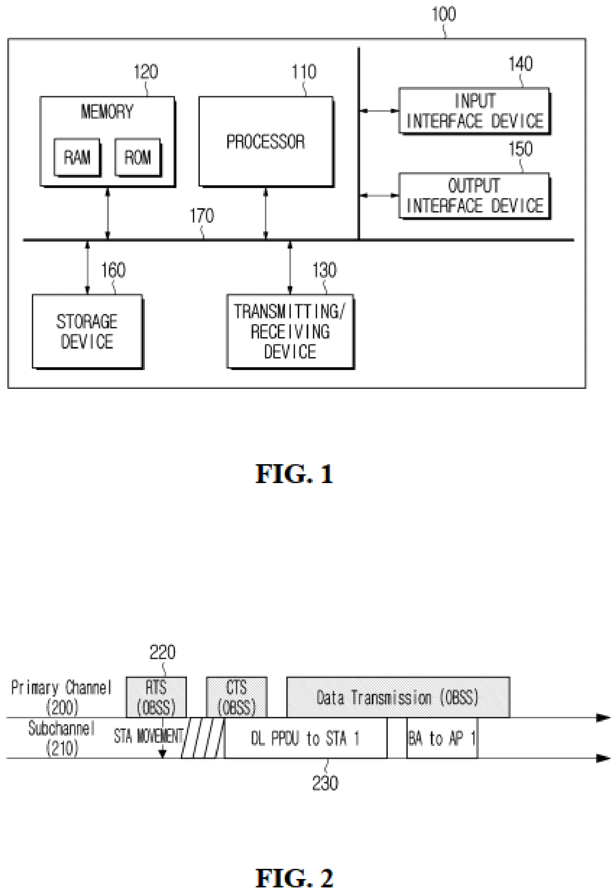

FIG. 2 illustrates a first embodiment of a communication method using a subchannel of a wireless LAN terminal.

Referring to FIG. 2, wireless LAN terminals may operate in a wireless LAN channel (e.g., 20 MHz, 40 MHz, 80 MHz, 160 MHz (or 80+80 MHz), 320 MHz channel). The wireless LAN terminals may include AP 1 and STA 1 associated with AP 1. Multiple wireless LAN terminals may further be associated with AP 1. Communication may be performed between AP 1 and the wireless LAN terminals associated with AP 1 using the wireless LAN channel. Communication by wireless LAN terminals other than AP 1 and the wireless LAN terminals associated with AP 1 may be referred to as OBSS (Overlapping Basic Service Set) communication. OBSS communication may cause interference to AP 1 and the wireless LAN terminals associated with AP 1.

In a wireless LAN channel, a primary channel 200 and a subchannel 210 may be set. The primary channel 200 and the subchannel 210 may be configured or negotiated between AP 1 and a wireless LAN terminal associated with AP 1. The primary channel 200 may be a channel including a primary 20MHz channel. The subchannel 210 may be a channel not including a primary 20MHz channel. There may be at least one subchannel 210. For example, the wireless LAN channel may be 40MHz, the primary 20MHz channel may be the primary channel 200, and a non-primary 20MHz channel may be the subchannel 210. As another example, the wireless LAN channel may be 80MHz, the primary channel 200 may be a 40MHz channel including the primary 20MHz channel, and the remaining 40MHz channel may be the subchannel 210. Alternatively, the primary 20MHz channel may be the primary channel 200, and the 20MHz channels other than the primary channel 200 may be three subchannels 210. That is, the configuration of the primary channel 200 and the subchannel 210 may be configured in various forms. The subchannel 210 may also be referred to as an 'auxiliary primary channel', an 'auxiliary channel', or an 'alternative channel'. For example, in an 80MHz channel composed of one primary channel 200 and three subchannels 210 as in the example above, the three subchannels 210 may be referred to as three auxiliary primary channels.

FIG. 2 is an embodiment for a case where there is one primary channel 200 and one subchannel 210. However, this embodiment is not intended to limit the operation to a case where there is only one primary channel 200 and one subchannel 210, and it should be understood that a wireless LAN terminal may operate in the same or similar manner as the embodiment even under various configurations of the primary channel 200 and the subchannel 210.

AP 1 and STA 1 may perform channel detection or/and channel access operations (e.g., EDCA backoff operation or backoff operation) on the primary channel 200. AP 1 may detect and decode frames transmitted on the OBSS on the primary channel 200 and recognize a communication duration of the OBSS. For example, the frames transmitted on the OBSS include at least one of an RTS frame 220 or a data frame. The communication duration of the OBSS may be recognized by information in a duration field present in the MAC header of the RTS frame 220 or/and information included in a PHY preamble of the RTS frame 220 (e.g., L-SIG information, etc.). When detecting a communication duration by receiving and decoding the frame transmitted on the OBSS, a Basic NAV (Network Allocation Vector) that does not transmit during the corresponding section is set. Alternatively, AP 1 and STA 1 must receive a CTS frame after receiving an RTS frame of the OBSS in order to set a Basic NAV based on communication of the OBSS. Alternatively, AP 1 and STA 1 must receive a physical layer preamble within the NAVTimeout time after receiving the CTS frame of the OBSS to confirm the Basic NAV. If AP 1 and STA 1 do not receive the RTS frame after receiving the CTS frame of the OBSS or do not receive the physical layer preamble within the NAVTimeout time, the Basic NAV set by the RTS frame of the OBSS may be canceled. Since AP 1 has received the RTS frame of the OBSS, it may wait until it receives the CTS frame or the PHY preamble of the OBSS transmitted thereafter. If AP 1 receives the CTS frame or the PHY preamble of the OBSS, AP 1 may operate by moving to a subchannel. That is, AP 1 may not operate on the subchannel immediately upon receiving the RTS frame of the OBSS, but may operate on the subchannel when the Basic NAV is confirmed. The Basic NAV may be confirmed when the CTS frame of the OBSS is received, or when the BSS Color, TXOP field, and Length field present in the PHY preamble of the frame of the OBSS are decoded, or when at least one MPDU is normally decoded after receiving the data frame of the OBSS, in which case AP 1 and STA 1 may operate on the subchannel. AP 1 may operate on the subchannel 210 during the communication duration of the OBSS. The communication duration of the OBSS is referred to as a 'subchannel communication possible section' or a 'communication possible section'. However, due to a difference in communication range or a channel state, STA 1 may not receive the frame transmitted on the OBSS. That is, STA 1 may not be able to decode the frame transmitted on the OBSS. STA 1 may detect the energy of the frame transmitted on the OBSS. That is, STA 1 may detect that there is a frame transmission on the OBSS. An energy threshold for switching to the subchannel 210 may be set in STA 1. The energy threshold may be a preset value, a value broadcast by AP 1 through a beacon, etc., or a value negotiated between STA 1 and AP 1. If the energy of the RTS frame of the OBSS detected by STA 1 is equal to or greater than the energy threshold, STA 1 may operate on the subchannel 210. On the subchannel 210, AP 1 and STA 1 may perform a channel access operation. For example, AP 1 may perform an EDCA backoff operation on the subchannel 210. If the channel access operation of AP 1 is successful, AP 1 may transmit a downlink frame 230 to STA 1 on the subchannel, and STA 1 may transmit a response frame (e.g., a BlockAck (BA) frame) to AP 1. Alternatively, if the channel access operation of STA 1 is successful, STA 1 may transmit an uplink frame to AP 1. STA 1 may not know the communication duration of the OBSS from the frame transmitted from the OBSS. If STA 1 cannot know the communication duration of the OBSS, STA 1 may transmit the RTS frame to AP 1. A specific value (e.g., a duration field set to 0) may be indicated in the MAC header of the RTS frame. The RTS frame with the specific value set may indicate a 'request for communication possible section information.' AP 1 may receive the RTS frame with the specific value set and transmit the CTS frame to STA 1. AP 1 may indicate communication possible section information through the MAC header (e.g., duration field) of the CTS frame. STA 1 may transmit an uplink frame to AP 1 within the communication possible section. If AP 1 does not know the communication possible section information, it may transmit the CTS frame by setting a specific value (e.g., duration field set to 0) in the MAC header. If it does not know the communication possible section information, STA 1 does not transmit the data frame and ends the communication on the subchannel 210. After receiving the CTS frame, STA 1 immediately switches its operation to the primary channel 200. AP 1 and all other STAs that receive the RTS frame and/or the CTS frame and realize that they do not know the communication possible section information also immediately switch their operation to the primary channel 200.

Alternatively, STA 1 may decode the frame transmitted on the OBSS, and AP 1 may not have decoded the frame transmitted on the OBSS. If the energy of the frame transmitted on the OBSS detected by AP 1 is greater than or equal to the energy threshold, AP 1 may operate on the subchannel 210. AP 1 may not know the communication duration information of the OBSS and may transmit the RTS frame with the specific value set to STA 1. AP 1 may receive the RTS frame with the specific value set and transmit the CTS frame indicating the communication possible section to AP 1. AP 1 may transmit a downlink frame to STA 1 within the communication possible section. On the subchannel 210, the communication between AP 1 and STA 1 may end within the communication duration of the OBSS.

If STA 1 does not know the communication possible section information, STA 1 may transmit the CTS frame by setting a specific value (for example, the duration field set to 0) in the MAC header. If AP 1 does not know the communication possible section information, AP 1 does not transmit the data frame and ends the communication on the subchannel 210. After receiving the CTS frame, AP 1 immediately switches the operation to the primary channel 200. All STAs that receive the RTS frame and/or CTS frame and realize that they do not know the communication possible section information also immediately switch the operation to the primary channel 200.

On the subchannel 210, frame transmission and reception must be performed within the communication duration of the OBSS. The frame transmission and reception end time on the subchannel 210 must take into account transition delay to the primary channel 200. Frame transmission and reception on the subchannel 210 must be completed before the channel transition delay, and the AP and all STAs must switch to the primary channel. Before the communication duration of the OBSS ends, AP 1 and all STAs associated with AP 1 may communicate on the primary channel 200 from the time when the communication duration of the OBSS ends, by moving to the primary channel 200. The communication possible section information may be indicated by considering at least one of the communication duration of the OBSS or the transition delay to the primary channel. The communication duration of the OBSS may be the transmission time length of a TXOP of the OBSS or one PPDU.

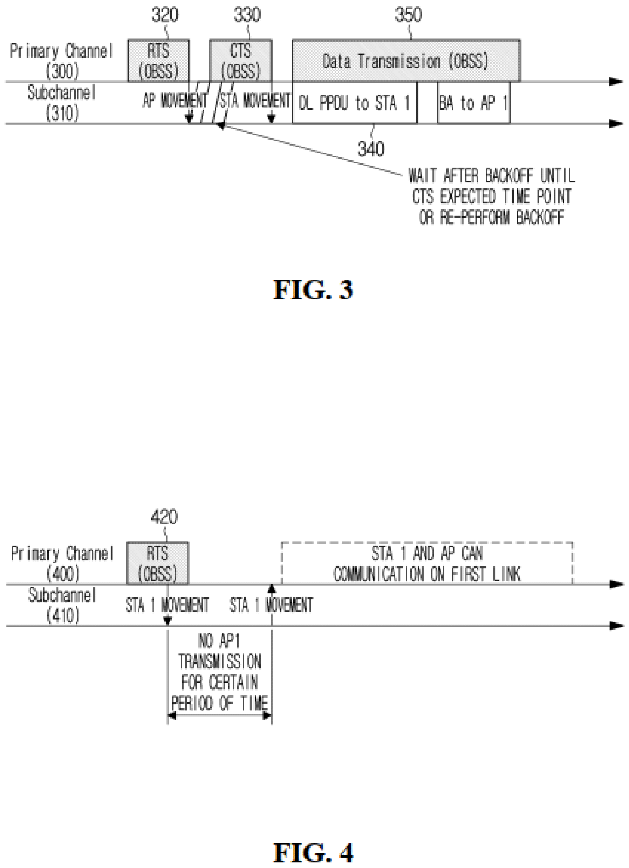

FIG. 3 illustrates a second embodiment of a communication method using a subchannel of a wireless LAN terminal.

Referring to FIG. 3, wireless LAN terminals may operate in a wireless LAN channel (e.g., 20 MHz, 40 MHz, 80 MHz, 160 MHz (or 80+80 MHz), 320 MHz channel). The wireless LAN terminal may include AP 1 and STA 1 associated with AP 1. Multiple wireless LAN terminals may be further associated with AP 1. Communication may be performed between AP 1 and the wireless LAN terminals associated with AP 1 using the wireless LAN channel. Communication by wireless LAN terminals other than AP 1 and the wireless LAN terminals associated with AP 1 may be referred to as OBSS (Overlapping Basic Service Set) communication. OBSS communication may cause interference to AP 1 and the wireless LAN terminals associated with AP 1.

In a wireless LAN channel, a primary channel 300 and a subchannel 310 may be set. The primary channel 300 and the subchannel 310 may be configured or negotiated between AP 1 and a wireless LAN terminal associated with AP 1. The primary channel 300 may be a channel including a primary 20MHz channel. The subchannel 310 may be a channel not including a primary 20MHz channel. There may be at least one subchannel 310. For example, the wireless LAN channel may be 40MHz, the primary 20MHz channel may be the primary channel 300, and a non-primary 20MHz channel may be the subchannel 310. As another example, the wireless LAN channel may be 80MHz, the primary channel 300 may be a 40MHz channel including the primary 20MHz channel, and the remaining 40MHz channel may be the subchannel 310. Alternatively, the primary 20MHz channel may be the primary channel 300, and the 20MHz channels other than the primary channel 300 may be three subchannels 310. That is, the configuration of the primary channel 300 and the subchannel 310 may be configured in various forms. The subchannel 310 may also be referred to as an 'auxiliary primary channel', an 'auxiliary channel', or an 'alternative channel'. For example, in an 80MHz channel composed of one primary channel 300 and three subchannels 310 as in the example above, the three subchannels 310 may be referred to as three auxiliary primary channels. The subchannels 310 may be referred to as subchannels 310.

FIG. 3 is an embodiment for a case where there is one primary channel 300 and one subchannel 310. However, this embodiment is not intended to limit the operation to a case where there is only one primary channel 300 and one subchannel 310, and it should be understood that a wireless LAN terminal may operate in the same or similar manner as the embodiment even under various configurations of the primary channel 300 and the subchannel 310.

AP 1 and STA 1 may perform channel detection or/and channel access operations (e.g., EDCA backoff operation or backoff operation) on the primary channel 300. AP 1 may detect and decode an RTS frame 320 of the OBSS on the primary channel 300 and know the communication duration of the OBSS. The communication duration of the OBSS may be known by information of the duration field present in a MAC header of the RTS frame 320 or/and information included in the PHY preamble of the RTS frame 320 (e.g., L-SIG information, etc.). AP 1 may operate on the subchannel 310 during the communication duration of the OBSS. The communication duration of the OBSS is referred to as a 'subchannel 310 communication possible section' or a 'communication possible section'. However, depending on the communication possible range or channel state, STA 1 may not detect and decode the RTS frame 320 of the OBSS. STA 1 may detect the energy of the CTS frame 330 of the OBSS or decode the CTS frame 330. If the energy of the CTS frame 330 of the OBSS detected by STA 1 is greater than an energy threshold set in STA 1, STA 1 may perform communication on the subchannel 310. Alternatively, if STA 1 decodes the RTS frame 320, the communication duration of the OBSS may be known, and STA 1 may perform communication during the communication duration of the OBSS on the subchannel 310. Due to the difference in the reception times of the RTS frame 320 and the CTS frame 330, the times at which AP 1 and STA 1 operate on the subchannel 310 may be different. For example, if AP 1 receives the RTS frame 320 of OBSS and transmits the frame to STA 1 on the subchannel 310 before the decoding completion or detection time of the CTS frame 330 on the subchannel 310, STA 1 cannot receive the frame. Therefore, if AP 1 decodes the RTS frame 320 and moves to the subchannel 310, it may delay frame transmission until the transmission completion time of the CTS frame 330 on the primary channel 300. For example, the channel access operation (e.g., an EDCA backoff operation) of AP 1 may be repeated until the transmission completion time of the CTS frame 330. Alternatively, even if the channel access operation of AP 1 is successful (e.g., the EDCA backoff counter reaches 0), AP 1 may maintain the backoff counter at 0 until the transmission completion time of the CTS frame 330. AP 1 may transmit a downlink frame 340 to STA 1 after the transmission completion time of the CTS frame 330. AP 1 may transmit the downlink frame 340 to STA 1 in accordance with the transmission completion time of the CTS frame 330. Alternatively, AP 1 may transmit the downlink frame 340 to STA 1 in accordance with the transmission initiation time of a data frame 350 after the SIFS time has elapsed after the transmission completion time of the CTS frame 330. STA 1, which has received the downlink frame 340, may transmit a response frame (e.g., a BlockAck (BA) frame) to AP 1. On the subchannel 310, the communication between AP 1 and STA 1 may end within the communication duration of the OBSS. In addition to the difference in the reception time of the RTS frame and the CTS frame, the frame reception times of AP 1 and STA 1 may be different from each other. For example, AP 1 may have received the CTS frame of the OBSS, but STA 1 may not have received the CTS frame of the OBSS. Conversely, STA 1 may not know the TXOP section of the OBSS until the PHY preamble (e.g., L-SIG information, TXOP field, BSS Color information) or MAC header of the data frame of the OBSS transmitted after the CTS frame is decoded. In this case, AP 1 may not transmit the frame on the subchannel until STA 1 confirms the TXOP section of the OBSS. That is, AP 1 may delay frame transmission until STA 1 confirms the communication duration of the OBSS and operates on the subchannel.

FIG. 4 illustrates a third embodiment of a communication method using a subchannel of a wireless LAN terminal.

Referring to FIG. 4, wireless LAN terminals may operate in a wireless LAN channel (e.g., 20 MHz, 40 MHz, 80 MHz, 160 MHz (or 80+80 MHz), 320 MHz channel). The wireless LAN terminal may include AP 1 and STA 1 associated with AP 1. Multiple wireless LAN terminals may be further associated with AP 1. Communication may be performed between AP 1 and the wireless LAN terminals associated with AP 1 using the wireless LAN channel. Communication by wireless LAN terminals other than AP 1 and the wireless LAN terminals associated with AP 1 may be referred to as OBSS (Overlapping Basic Service Set) communication. OBSS communication may cause interference to AP 1 and the wireless LAN terminals associated with AP 1.

In a wireless LAN channel, a primary channel 400 and a subchannel 410 may be set. The primary channel 400 and the subchannel 410 may be configured or negotiated between AP 1 and a wireless LAN terminal associated with AP 1. The primary channel 400 may be a channel including a primary 20MHz channel. The subchannel 410 may be a channel not including a primary 20MHz channel. There may be one or more subchannels 410. For example, the wireless LAN channel may be 40MHz, the primary 20MHz channel may be the primary channel 400, and a non-primary 20MHz channel may be the subchannel 410. As another example, the wireless LAN channel may be 80MHz, the primary channel 400 may be a 40MHz channel including a primary 20MHz channel, and the remaining 40MHz channels may be subchannels 410. Alternatively, the primary 20MHz channel may be the primary channel 400, and the 20MHz channels other than the primary channel 400 may be three subchannels 410. That is, the configuration of the primary channel 400 and the subchannels 410 may be configured in various forms. The subchannels 410 may also be referred to as an 'auxiliary primary channel', an 'auxiliary channel', or an 'alternative channel'. For example, in an 80MHz channel composed of one primary channel 400 and three subchannels 410 as in the example above, the three subchannels 410 may be referred to as three auxiliary primary channels. The subchannels 410 may be referred to as subchannels 410.

FIG. 4 is an embodiment for a case where there is one primary channel 400 and one subchannel 410. However, this embodiment is not intended to limit the operation to a case where there is only one primary channel 400 and one subchannel 410, and it should be understood that a wireless LAN terminal may operate in the same or similar manner as the embodiment even under various configurations of the primary channels 400 and the subchannel 410.

AP 1 and STA 1 may perform channel detection and/or channel access operations (e.g., EDCA backoff operation or backoff operation) on the primary channel 400. STA 1 may detect and/or decode an RTS frame 420 of an OBSS on the primary channel 400. STA 1 may decode an RTS frame 420 or operate on a subchannel 410 when the energy of the RTS frame 420 is greater than or equal to an energy threshold. STA 1 may operate on the subchannel based on reception of the RTS frame of the OBSS, the CTS frame of the OBSS, and the data frame of the OBSS. For example, STA 1 may operate on the subchannel based on reception of a PHY preamble (e.g., L-SIG information, TXOP field, BSS Color information) of the data frame and/or a MAC header. STA 1 may perform a channel detection/channel access operation on the subchannel 410. If there is no transmission from AP 1 or STAs associated with AP 1 for a certain period of time, STA 1 may operate on the primary channel 400 again. The certain period value may be a preset value, a value broadcast by AP 1 through a beacon, etc., or a value negotiated by STA 1 and AP 1. Alternatively, if STA 1 succeeds in a channel access operation (EDCA backoff operation) on the subchannel 410, it may transmit the RTS frame to AP 1. AP 1 may not respond to STA 1. If AP 1 does not respond to STA 1's RTS frame, STA 1 may operate on the primary channel 400 again.

If STA 1 fails to decode the RTS frame 400, CTS frame, or data frame of the OBSS on the primary channel 400 and the detected energy is equal to or less than the energy threshold, STA 1 may not operate on the subchannel 410 and may continue to operate on the primary channel 400.

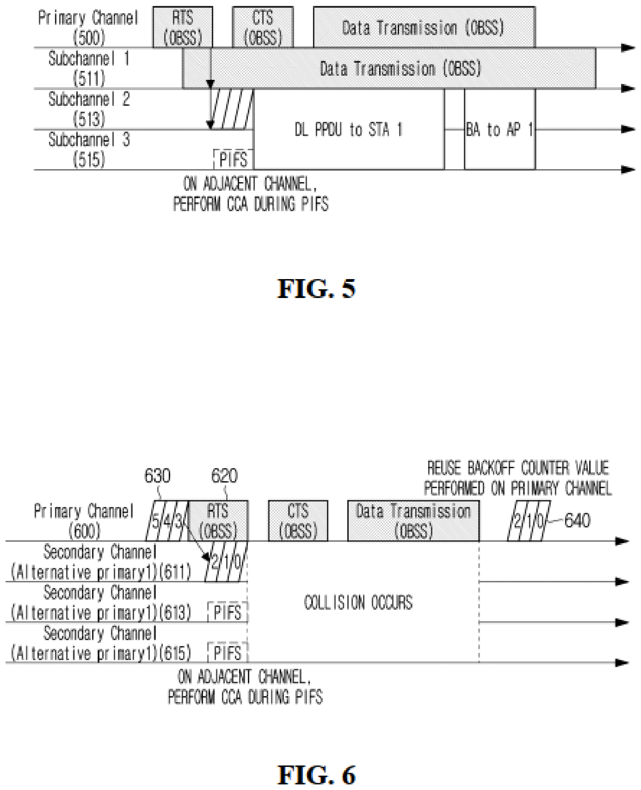

FIG. 5 illustrates a fourth embodiment of a communication method using a subchannel of a wireless LAN terminal.

Referring to FIG. 5, wireless LAN terminals may operate in a wireless LAN channel (e.g., 20 MHz, 40 MHz, 80 MHz, 160 MHz (or 80+80 MHz), 320 MHz channel). The wireless LAN terminal may include AP 1 and STA 1 associated with AP 1. Multiple wireless LAN terminals may be further associated with AP 1. Communication may be performed between AP 1 and the wireless LAN terminals associated with AP 1 using the wireless LAN channel. Communication by wireless LAN terminals other than AP 1 and the wireless LAN terminals associated with AP 1 may be referred to as OBSS (Overlapping Basic Service Set) communication. OBSS communication may cause interference to AP 1 and the wireless LAN terminals associated with AP 1.

In a wireless LAN channel, a primary channel 500 and subchannels 511, 513 and 515 may be set. The primary channel 500 and subchannels 511, 513 and 515 may be configured or negotiated between AP 1 and a wireless LAN terminal associated with AP 1. The primary channel 500 may be a channel including a primary 20MHz channel. The subchannels 511, 513 and 515 may be channels that do not include a primary 20MHz channel. At least one subchannel 511, 513 or 515 may exist. For example, the wireless LAN channel may be 40MHz, the primary 20MHz channel may be the primary channel, and a non-primary 20MHz channel may be the subchannel. As another example, a wireless LAN channel may be 80 MHz, the primary channel may be a 40 MHz channel including a primary 20 MHz channel, and the remaining 40 MHz channels may be subchannels. Alternatively, the primary 20 MHz channel may be the primary channel, and the 20 MHz channels other than the primary channel may be three subchannels. In other words, the configuration of the primary channel and subchannels may be configured in various ways. The subchannels 511, 513 and 515 may also be referred to as 'auxiliary primary channels', an 'auxiliary channels', or an 'alternative channels'. For example, in an 80 MHz channel composed of one primary channel 500 and three subchannels 511, 513 and 515 as in the example above, the three subchannels 511, 513 and 515 may be referred to as three auxiliary primary channels.

FIG. 5 is an embodiment for a case in which there is one primary channel 500 and three subchannels 511, 513 and 515. However, this embodiment is not intended to limit operation to a case in which there is only one primary channel and three subchannels, and it should be understood that a wireless LAN terminal may operate in the same or similar manner as the embodiment even under various configurations of the primary channel and the subchannel.

AP 1 and STA 1 may perform channel detection or/and channel access operations (e.g., EDCA backoff operation or backoff operation) on the primary channel 500. AP 1 may detect and decode an RTS frame of an OBSS on the primary channel 500 and recognize a communication duration of the OBSS. The communication duration of the OBSS may be recognized by information in a duration field present in a MAC header of the RTS frame or/and information included in a PHY preamble of the RTS frame (e.g., L-SIG information, etc.). In contrast, the communication duration of the OBSS recognized from the RTS frame may be confirmed only by receiving a CTS frame transmitted subsequent to the RTS frame. The communication duration of the OBSS may be confirmed by reception of a CTS frame, a PHY preamble (e.g., L-SIG information, TXOP field, BSS Color information), or a MAC header in addition to the RTS frame. Here, the PHY preamble and MAC header may be included in the data frame of the OBSS. AP 1 may operate on the subchannels 511, 513 and 515 during the communication duration of the OBSS. The communication duration of the OBSS is referred to as a 'subchannel communication possible section' or a 'communication possible section'. STA 1 may also decode the RTS frame in the same manner as AP 1. Alternatively, STA 1 may detect the energy of the RTS frame, and the detected energy may be greater than or equal to an energy threshold. Accordingly, STA 1 may operate on the subchannels 511, 513 and 515. AP 1 and STA 1 may have negotiated a procedure to operate in the order of subchannel 1 511, subchannel 2 513, and subchannel 3 515 when the primary channel 500 is being used by the OBSS. The subchannel number may be a sequential 20MHz channel extending from the primary channel, such as 40MHz, 80MHz, etc. According to the negotiated procedure, AP 1 and STA 1 may operate on subchannel 1 511. However, subchannel 1 511 may be busy. Subchannel 1 511 may be busy due to OBSS or non-802.11 (non-wireless LAN) communication. When subchannel 1 511 is busy for a certain period of time, AP 1 and STA 1 may operate on subchannel 2 513. For example, the certain period of time may be a priority interframe space (PIFS). AP 1 and STA 1 may not know the communication duration of subchannel 1 511 and may perform communication for the communication possible section confirmed in the primary channel 500. If AP 1 or STA 1 does not know the communication possible section, it may obtain the communication possible section information through the RTS frame and CTS frame exchange procedure in which a specific value identical or similar to that of the embodiment of FIG. 3 is set. Subchannel 3 515, which is a subchannel adjacent to subchannel 2 513, can be used for communication together with subchannel 2 513 when the channel is idle for a specific period of time (e.g., PIFS (priority interframe space) time).

FIG. 6 illustrates a fifth embodiment of a communication method using a subchannel of a wireless LAN terminal.

Referring to FIG. 6, wireless LAN terminals may operate in a wireless LAN channel (e.g., 20 MHz, 40 MHz, 80 MHz, 160 MHz (or 80+80 MHz), 320 MHz channel). The wireless LAN terminal may include AP 1 and STA 1 associated with AP 1. Multiple wireless LAN terminals may be further associated with AP 1. Communication may be performed between AP 1 and the wireless LAN terminals associated with AP 1 using the wireless LAN channel. Communication by wireless LAN terminals other than AP 1 and the wireless LAN terminals associated with AP 1 may be referred to as OBSS (Overlapping Basic Service Set) communication. OBSS communication may cause interference to AP 1 and the wireless LAN terminals associated with AP 1.

In a wireless LAN channel, a primary channel and a subchannel may be set. The primary channel and the subchannel may be configured or negotiated between AP 1 and a wireless LAN terminal associated with AP 1. The primary channel may be a channel including a primary 20MHz channel. The subchannel may be a channel not including the primary 20MHz channel. There may be at least one subchannel. For example, the wireless LAN channel may be 40MHz, the primary 20MHz channel may be the primary channel, and a non-primary 20MHz channel may be the subchannel. As another example, the wireless LAN channel may be 80MHz, the primary channel may be a 40MHz channel including the primary 20MHz channel, and the remaining 40MHz channels may be subchannels. Alternatively, the primary 20MHz channel may be the primary channel 600, and the 20MHz channels other than the primary channel 600 may be three subchannels 611, 613 and 615. That is, the configuration of the primary channel and subchannels can be configured in various forms. The subchannels may also be referred to as 'auxiliary primary channels', 'auxiliary channels', 'secondary channel', or 'alternative channel'. For example, in an 80 MHz channel composed of one primary channel 600 and three subchannels 611, 613 and 615 as in the example above, the three subchannels 611, 613 and 615 may be referred to as three auxiliary primary channels.

FIG. 6 is an embodiment for a case where there is one primary channel 600 and three subchannels 611, 613 and 615. However, this embodiment is not intended to limit the operation to a case where there is only one primary channel 600 and three subchannels 611, 613 and 615, and it should be understood that a wireless LAN terminal may operate in the same or similar manner as the embodiment even under various configurations of the primary channel and the subchannel.

In AP 1 and STA 1, the channel access parameters of the primary channel 600 and the subchannels 611, 613 and 615 may be managed separately. For example, the channel access parameters of the primary channel 600, CW[AC] and QSRC[AC], may be managed differently in the subchannels 611, 613 and 615. The channel access parameters of the subchannels 611, 613 and 615 may be managed as many times as the number of subchannels 611, 613 and 615, or multiple subchannels 611, 613 and 615 may use common channel access parameters. The channel access parameters of the primary channel 600 and the channel access parameters of the subchannels 611, 613 and 615 may or may not be linked. When the channel access parameters are not linked, the channel access parameters of the primary channel 600 and subchannels 611, 613 and 615 operate completely independently.

When the channel access parameters are linked, for example, the following operations may be performed. If data related to a specific AC is successfully transmitted on the subchannels 611, 613 and 615, EDCA parameters related to the corresponding AC may be initialized in the primary channel 600. For example, CW[AC] and QSRC[AC] of the primary channel 600 may be initialized. If data related to a specific AC is successfully transmitted in the primary channel 600, EDCA parameters related to the corresponding AC may be initialized in the subchannels 611, 613 and 615. For example, CW[AC] and QSRC[AC] of the subchannels 611, 613 and 615 may be initialized.

If the data related to the specific AC fails to be transmitted on the subchannels 611, 613 and 615, the EDCA parameters related to the corresponding AC may be increased in the primary channel 600. For example, CW[AC] and QSRC[AC] of the primary channel 600 may be increased. If the data related to the specific AC fails to be transmitted on the primary channel, the EDCA parameters related to the corresponding AC may be increased in the subchannels 611, 613 and 615. For example, CW[AC] and QSRC[AC] of the subchannels 611, 613 and 615 may be increased. Even if the channel access parameters of the primary channel 600 and the subchannels 611, 613 and 615 are linked, some parameters may not be linked. For example, the QSRC[AC] parameter of the subchannels 611, 613 and 615 may not be increased even if transmission fails on the primary channel 600.

Alternatively, the channel access parameters of the subchannels 611, 613 and 615 may be one-time. For example, when the AP and an STA that were operating on the primary channel 600 move to and operate on the subchannels 611, 613 and 615, the AP and the STA may select channel access parameters to use on the subchannels 611, 613 and 615, and based on the selected channel access parameters, the AP and the STA may perform frame transmission on the subchannels 611, 613 and 615. When the AP or STA moves from the subchannels 611, 613 and 615 to the primary channel 600 again, the channel access parameters of the subchannels 611, 613 and 615 may be discarded regardless of the success or failure of transmission on the subchannels 611, 613 and 615. The following is an example of the channel access parameter management method.

AP 1 and STA 1 may perform channel detection or/and channel access operations on the primary channel 600. For example, the channel access operation includes an EDCA backoff operation and a backoff operation 630. AP 1 may detect and decode an RTS frame 620 of an OBSS on the primary channel 600 and recognize a communication duration of the OBSS. The communication duration of the OBSS may be recognized by information in a duration field present in a MAC header of an RTS frame 620 or/and information included in a PHY preamble of the RTS frame 620 (e.g., L-SIG information, etc.). In contrast, the communication duration of the OBSS recognized from the RTS frame may be confirmed only by receiving a CTS frame transmitted subsequent to the RTS frame. The communication duration of the OBSS may be confirmed by receiving a CTS frame, a PHY preamble (e.g., L-SIG information, TXOP field, BSS Color information), or a MAC header in addition to the RTS frame. Here, the PHY preamble and the MAC header may be included in a data frame of the OBSS. AP 1 may operate on subchannels 611, 613 and 615 during the communication duration of the OBSS. The communication duration of the OBSS is referred to as a 'subchannel communication possible section' or a 'communication possible section'. STA 1 may also decode the RTS frame 620 in the same way as AP 1. Alternatively, STA 1 may detect energy of the RTS frame 620, and the detected energy may be greater than or equal to an energy threshold. Accordingly, STA 1 may operate on the subchannels 611, 613 and 615. AP 1 and STA 1 may have negotiated a procedure to operate in the order of subchannel 1 611, subchannel 2 613, and subchannel 3 615 when the primary channel 600 is being used by the OBSS. In at least one of subchannels 1 611, 2 613, and 3 615, the transmission operation of AP 1 or/and STA 1 may have failed, and AP 1 and STA 1 may operate on the primary channel 600 again. If transmission fails on subchannels 611, 613 and 615, the channel access operation may be performed again on the primary channel 600. For example, the EDCA backoff counter 640 of AP 1 or/and STA 1 may reuse the backoff counter 630 used on the primary channel 600 before moving to the subchannels 611, 613 and 615. Alternatively, the EDCA backoff counter 640 of AP 1 or/and STA 1 may be re-selected using the existing EDCA backoff parameter used on the primary channel 600, or may be re-selected using the initialized EDCA backoff parameter (e.g., CW[AC] equal to CWmin[AC], QSRC[AC] equal to 0). Alternatively, for fairness in the event of a collision due to transmission failure in the subchannels 611, 613 and 615, the backoff counter 640 of the primary channel 600 may be re-selected using an EDCA backoff parameter increased from the EDCA parameter used in the primary channel 600 (e.g., a CW[AC] increased by two times and a QSRC[AC] increased by 1).

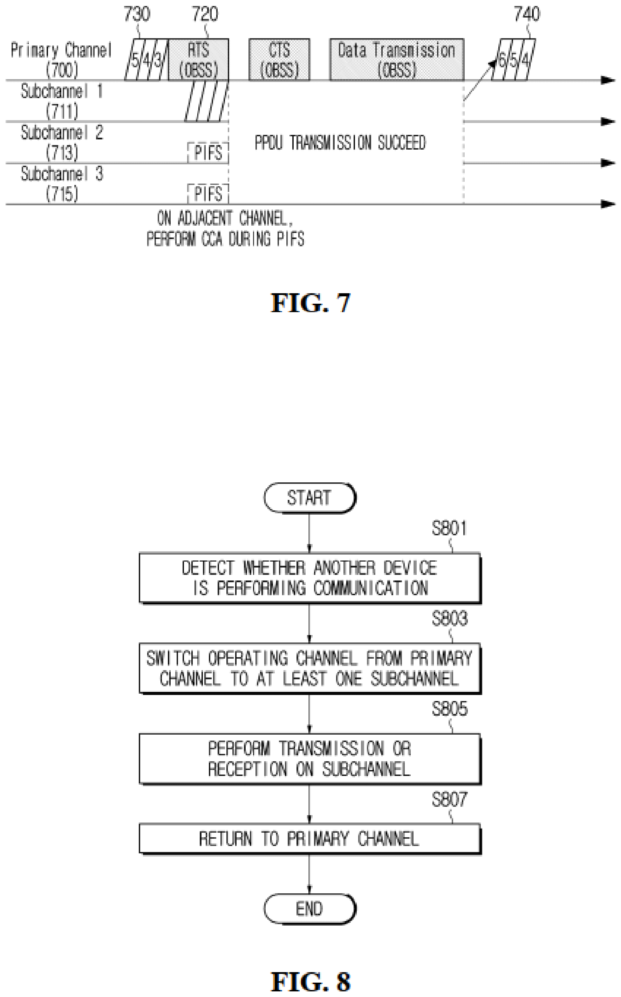

FIG. 7 illustrates a sixth embodiment of a communication method using a subchannel of a wireless LAN terminal.

Referring to FIG. 7, wireless LAN terminals may operate in a wireless LAN channel (e.g., 20 MHz, 40 MHz, 80 MHz, 160 MHz (or 80+80 MHz), 320 MHz channel). The wireless LAN terminal may include AP 1 and STA 1 associated with AP 1. Multiple wireless LAN terminals may be further associated with AP 1. Communication may be performed between AP 1 and the wireless LAN terminals associated with AP 1 using the wireless LAN channel. Communication by wireless LAN terminals other than AP 1 and the wireless LAN terminals associated with AP 1 may be referred to as OBSS (Overlapping Basic Service Set) communication. OBSS communication may cause interference to AP 1 and the wireless LAN terminals associated with AP 1.

In a wireless LAN channel, a primary channel and subchannels may be configured. The primary channel and subchannels may be configured or negotiated between AP 1 and a wireless LAN terminal associated with AP 1. The primary channel may be a channel including a primary 20MHz channel. The subchannel may be a channel not including the primary 20MHz channel. There may be at least one subchannel. For example, the wireless LAN channel may be 40MHz, the primary 20MHz channel may be the primary channel, and a non-primary 20MHz channel may be the subchannel. As another example, the wireless LAN channel may be 80MHz, the primary channel may be a 40MHz channel including the primary 20MHz channel, and the remaining 40MHz channels may be subchannels. Alternatively, the primary 20MHz channel may be the primary channel, and the non-primary 20MHz channels may be three subchannels. In other words, the configuration of the primary channel and subchannels may be configured in various forms. The subchannel may also be referred to as an 'auxiliary primary channel', an 'auxiliary channel', a 'secondary channel', or an 'alternative channel'. For example, in an 80 MHz channel composed of one primary channel 700 and three subchannels 711, 713 and 715 as in the example above, the three subchannels 711, 713 and 715 may be referred to as three auxiliary primary channels.

FIG. 7 is an embodiment for a case where there is one primary channel 700 and three subchannels 711, 713 and 715. However, this embodiment is not intended to limit the operation to a case where there is only one primary channel 700 and three subchannels 711, 713 and 715, and it should be understood that a wireless LAN terminal may operate in the same or similar manner as the embodiment even under various configurations of the primary channel and the subchannel.

In AP 1 and STA 1, the channel access parameters of the primary channel 700 and the subchannels 711, 713 and 715 may be managed separately. Here, the channel access parameters include a backoff parameter. For example, the channel access parameters of the primary channel 700, CW[AC] and QSRC[AC], may be managed differently in the subchannels 711, 713 and 715. The channel access parameters of the subchannels 711, 713 and 715 may be managed as many times as the number of subchannels 711, 713 and 715, and multiple subchannels 711, 713 and 715 may use common channel access parameters. The channel access parameters of the primary channel 700 and the channel access parameters of the subchannels 711, 713 and 715 may or may not be linked. When the channel access parameters are not linked, the channel access parameters of the primary channel 700 and subchannels 711, 713 and 715 operate completely independently.

When the channel access parameters are linked, the following operations may be performed. If data related to a specific AC is successfully transmitted on the subchannels 711, 713 and 715, EDCA parameters related to the corresponding AC may be initialized in the primary channel 700. For example, CW[AC] and QSRC[AC] of the primary channel 700 may be initialized. If the data related to the specific AC is successfully transmitted in the primary channel 700, EDCA parameters related to the corresponding AC may be initialized in the subchannels 711, 713 and 715. For example, CW[AC] and QSRC[AC] of the subchannels 711, 713 and 715 may be initialized.

If the data related to the specific AC fails to be transmitted on the subchannels 711, 713 and 715, an EDCA parameter related to the corresponding AC may be increased in the primary channel 700. For example, CW[AC] and QSRC[AC] of the primary channel 700 may be increased. If the data related to the specific AC fails to be transmitted on the primary channel 700, an EDCA parameter related to the corresponding AC may be increased in the subchannels 711, 713 and 715. For example, CW[AC] and QSRC[AC] of the subchannels 711, 713 and 715 may be increased. Even if the channel access parameters of the primary channel 700 and the subchannels 711, 713 and 715 are linked, some parameters may not be linked. For example, the QSRC[AC] parameter of the subchannels 711, 713 and 715 may not be increased even if data transmission fails on the primary channel 700.

Alternatively, the channel access parameters of the subchannels 711, 713 and 715 may be one-time. For example, when an AP and an STA that were operating on the primary channel 700 move to and operate on the subchannels 711, 713 and 715, the AP and the STA may select channel access parameters to use on the subchannels 711, 713 and 715 and perform frame transmission on the subchannels 711, 713 and 715 based on the selected channel access parameters. When operating from the subchannels 711, 713 and 715 back to the primary channel 700, the AP and the STA may discard the channel access parameters of the subchannels 711, 713 and 715 regardless of the success or failure of transmission on the subchannels 711, 713 and 715. The following is an example of the channel access parameter management method.

AP 1 and STA 1 may perform channel detection or/and channel access operation 730 on the primary channel 700. For example, the channel access operation 730 includes at least one of an EDCA backoff operation or a backoff operation. AP 1 may detect and decode an RTS frame 720 of an OBSS on the primary channel 700 and recognize a communication duration of the OBSS. The communication duration of the OBSS may be recognized by information of a duration field present in a MAC header of the RTS frame 720 or/and information included in a PHY preamble of the RTS frame 720 (e.g., L-SIG information, etc.). In contrast, the communication duration of the OBSS recognized from the RTS frame may be confirmed only by receiving a CTS frame transmitted subsequent to the RTS frame. The communication duration of the OBSS may be confirmed by reception of a CTS frame, a PHY preamble (e.g., L-SIG information, TXOP field, BSS Color information), or a MAC header in addition to the RTS frame. Here, the PHY preamble and the MAC header may be included in the data frame of the OBSS. AP 1 may operate on subchannels 711, 713 and 715 during the communication duration of the OBSS. The communication duration of the OBSS is referred to as a 'subchannel communication possible section' or a 'communication possible section'. STA 1 may also decode the RTS frame 720 in the same manner as AP 1. Alternatively, STA 1 may detect the energy of the RTS frame 720, and the detected energy may be equal to or greater than an energy threshold. Therefore, STA 1 may operate on subchannels 711, 713 and 715. AP 1 and STA 1 may have negotiated a procedure to operate in the order of subchannel 1 711, subchannel 2 713, and subchannel 3 715 when the primary channel 700 is being used by the OBSS. In at least one of subchannels 1 711, 2 713, and 3 715, the transmission operation of AP 1 or/and STA 1 may have been successful, and AP 1 and STA 1 may operate on the primary channel 700 again. On the primary channel 700, the channel access operation 740 may be performed again. Since the frame has already been transmitted on the primary channel 700, a backoff counter 740 may be selected again in the primary channel 700 for fairness. The backoff counter 740 of AP 1 or/and STA 1 may be selected using the EDCA backoff parameters used in the primary channel 700 before moving to the subchannels 711, 713 and 715. Alternatively, the backoff counter 740 of AP 1 or/and STA 1 may be newly selected using one of the EDCA backoff parameters increased compared with the EDCA backoff parameters used in the primary channel 700 (e.g., CW[AC] increased by 2 times and QSRC[AC] increased by 1) or the initialized EDCA backoff parameters (e.g., CW[AC] equal to CWmin[AC], QSRC[AC] equal to 0). Alternatively, if the backoff counter 730 used in the primary channel 700 of AP 1 or/and STA 1 is greater than or equal to a certain value, AP 1 or/and STA 1 may perform channel access without newly selecting the backoff counter 740 on the primary channel 700.

Hereinafter, a communication method using a subchannel according to an embodiment of the present disclosure will be exemplarily described. The communication method using a subchannel is performed by an AP and an STA. The STA may be an STA associated with the AP. When the primary channel is being used, the AP and the STA may perform communication using at least one subchannel. That is, when the primary channel is being used, the STA and the AP may perform communication by switching to a subchannel. In other words, the STA and the AP may temporarily use a subchannel as a primary channel. In other words, a subchannel may serve as an alternative or substitute for the primary channel. The operation of switching a channel to a subchannel may be referred to as subchannel connection, channel switching, subchannel switching, or channel switching. The operation of switching a channel from a subchannel to a primary channel may be referred to as channel reversion. The subchannel may be a channel in an adjacent band. The subchannel may refer to a channel in a band remaining from the entire channel band excluding the band of the primary channel.

FIG. 8 illustrates an embodiment of a method for operating an STA according to an embodiment of the present disclosure. FIG. 8 illustrates an embodiment of a method for operating an STA associated with an AP. The STA may transmit or receive data.

Referring to FIG. 8, in step S801, the STA detects whether another device is performing communication. Here, the other device refers to a device other than the STA and an AP associated with the STA. The communication of the other device may be referred to as OBSS communication. The STA may detect whether OBSS communication is performed using a frame transmitted during OBSS communication. For example, the STA may recognize OBSS communication by detecting the energy of an RTS frame of OBSS communication (e.g., the RTS frame 320 of FIG. 3). As another example, the STA may recognize OBSS communication by detecting the energy of a CTS frame of OBSS communication (e.g., the CTS frame 330 of FIG. 3). As yet another example, the STA may recognize OBSS communication by decoding a frame of OBSS communication. The STA may obtain information about an OBSS communication duration. The OBSS communication duration refers to a time section during which OBSS communication is performed. Information about the communication duration may be obtained from the AP. Alternatively, information about the OBSS communication duration may be obtained based on a frame transmitted in the OBSS communication (e.g., the RTS frame 320 of FIG. 3). If information about the OBSS communication duration cannot be obtained, the STA may not perform step S803 and below.

In step S803, the STA switches the operating channel from the primary channel (e.g., the primary channel 300 of FIG. 3) to at least one subchannel (e.g., the subchannel 310 of FIG. 3). Here, the operating channel is a channel that the AP and the STA use for communication. The STA may switch the operating channel to a subchannel adjacent to the primary channel. Here, the subchannel adjacent to the primary channel means a subchannel whose frequency band is adjacent to the primary channel. If the subchannel adjacent to the primary channel is busy, the STA may switch the channel to another subchannel. For example, the STA may switch the channel to a subchannel (e.g., subchannel 2 513 of FIG. 5) adjacent to a busy subchannel (e.g., subchannel 1 511 of FIG. 5). The STA may switch the channel to at least one subchannel that is idle. In other words, the STA may switch the channel to at least one subchannel that includes a subchannel with a frequency band closest to the primary channel among the subchannels that are not busy.

In step S805, the STA performs transmission or reception on a subchannel. The STA determines a transmission time point to perform transmission. The transmission time point may be, for example, a time point when both the STA and the AP switch the operating channel to the subchannel. The STA performs a channel access procedure to perform transmission. The channel access procedure may be, for example, an EDCAF backoff procedure. The channel access procedure of the subchannel may be performed based on at least one of a channel access parameter of the subchannel or a channel access parameter of the primary channel. The channel access parameter includes a backoff parameter. The channel access parameter of the subchannel may be linked to the channel access parameter of the primary channel. Alternatively, the channel access parameter of the subchannel and the channel access parameter of the primary channel may be independent. After the channel access procedure is successful, the STA may wait until the AP and the STA switch the channel to the subchannel, or may retry the channel access procedure. That is, after both the AP and the STA switch the channel to the subchannel, the STA may transmit data. To this end, the STA may anticipate the AP's channel switching time. For example, the STA may anticipate the AP's channel switching time. For example, the STA may anticipate the AP's channel switching time based on the time when the CTS frame transmission is completed. After the channel access procedure is successful, the STA transmits data to the AP. The data transmission may succeed. Alternatively, the data transmission may fail. If no frame is received from the AP for a specific period of time, the STA performs step S807. Here, the specific period of time may be defined by negotiation between the AP and the STA, broadcast by the AP, or may be a predefined value.

In step S807, the STA returns to the primary channel. In other words, the STA switches the channel from the subchannel to the primary channel. The STA switches the channel to the primary channel before the OBSS communication duration ends. The STA may perform a channel access procedure (e.g., channel access procedure 640 of FIG. 6) for transmission on the primary channel. The channel access parameters of the primary channel and the channel access parameters of the subchannel may not be linked. Alternatively, the channel access parameters of the primary channel and the channel access parameters of the subchannel may be linked. For example, if data transmission on the subchannel is successful, the channel access parameters of the primary channel may change. The channel access parameters of the primary channel may have increased values, decreased values, or initialized values compared to the channel access parameters previously used on the primary channel. As another example, if data transmission on the subchannel fails, the channel access parameters of the primary channel may change based on the channel access parameters of the subchannel. The channel access parameters of the primary channel may have increased values, decreased values, or initialized values compared to the channel access parameters previously used on the primary channel.

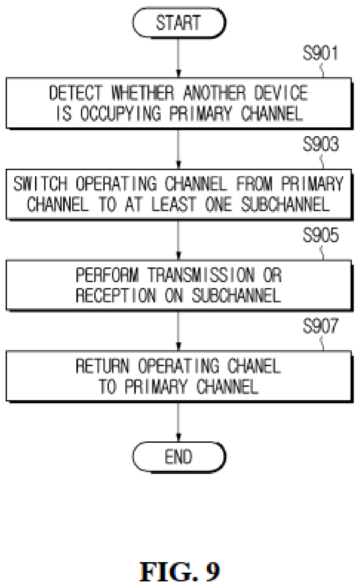

FIG. 9 illustrates an embodiment of a method for operating an AP according to an embodiment of the present disclosure. FIG. 9 illustrates an embodiment of a method for an AP associated with an AP to operate. The AP may transmit or receive data.

Referring to FIG. 9, in step S901, the AP detects whether another device is occupying the primary channel. Here, the other device refers to a device other than the AP and the STA associated with the AP. The other device occupying the primary channel may mean that the other device is performing communication on the primary channel. The communication of the other device may be referred to as OBSS communication. The AP may detect whether OBSS communication is performed using a frame transmitted during OBSS communication. For example, the AP may recognize OBSS communication by detecting the energy of an RTS frame of OBSS communication (e.g., an RTS frame 320 of FIG. 3). As another example, the AP may recognize OBSS communication by detecting the energy of a CTS frame of OBSS communication (e.g., a CTS frame 330 of FIG. 3). As yet another example, the AP may recognize OBSS communication by decoding a frame of OBSS communication. The AP may obtain information about an OBSS communication duration. The OBSS communication duration refers to the time period during which OBSS communication is performed. Information about the OBSS communication duration may be obtained from the AP. Alternatively, information about the OBSS communication duration may be obtained based on frames transmitted during OBSS communication. If information about the OBSS communication duration cannot be obtained, the AP may not perform step S903 and below.

In step S903, the AP switches the operating channel from the primary channel (e.g., the primary channel 300 of FIG. 3) to at least one subchannel (e.g., the subchannel 310 of FIG. 3). Here, the operating channel is a channel used by the AP and the STA for communication. The AP may switch the operating channel to a subchannel adjacent to the primary channel. Here, the subchannel adjacent to the primary channel means a subchannel whose frequency band is adjacent to the primary channel. If the subchannel adjacent to the primary channel is busy, the AP may switch the channel to another subchannel. For example, the AP may switch the channel to a subchannel adjacent to a busy subchannel (e.g., subchannel 1 511 of FIG. 5) (e.g., subchannel 2 513 of FIG. 5). The AP may switch the channel to at least one subchannel that is idle. In other words, the AP may switch the channel to at least one subchannel that includes a subchannel with a frequency band closest to the primary channel among the subchannels that are not busy.

In step S905, the AP performs transmission or reception on a subchannel. The AP determines a transmission time point to perform transmission. The transmission time point may be, for example, a time point when both the STA and the AP switch the operating channel to the subchannel. The AP performs a channel access procedure to perform transmission. The channel access procedure may be, for example, an EDCAF backoff procedure. The channel access procedure of the subchannel may be performed based on at least one of the channel access parameters of the subchannel or the channel access parameters of the primary channel. The channel access parameters include a backoff parameter. The channel access parameters of the subchannel may be linked to the channel access parameters of the primary channel. Alternatively, the channel access parameters of the subchannel and the channel access parameters of the primary channel may be independent. After the channel access procedure is successful, the AP may wait until the AP and the STA switch to the subchannel, or may retry the channel access procedure. In other words, the AP may transmit data after both the AP and the STA switch the channel to the subchannel. To this end, the AP may anticipate the channel switching time of the STA. For example, the AP may anticipate the channel switching time of the STA. For example, the AP may anticipate the channel switching time of STA based on the time when the CTS frame transmission is completed. After the channel access procedure is successful, the AP transmits data to the STA. The data transmission may succeed. Alternatively, the data transmission may fail. If no frame is received from the AP for a specific period of time, the AP performs step S907. Here, the specific period of time may be defined through negotiation between the AP and the STA, broadcast by the AP, or may be a predefined value.

In step S907, the AP returns the operating channel to the primary channel. In other words, the AP switches from the subchannel to the primary channel. The AP switches the channel to the primary channel before the OBSS communication duration ends. The AP may perform a channel access procedure (e.g., channel access procedure 640 of FIG. 6) for transmission on the primary channel. The channel access parameters of the primary channel and the channel access parameters of the subchannel may not be linked. Alternatively, the channel access parameters of the primary channel and the channel access parameters of the subchannel may be linked. For example, if data transmission on the subchannel is successful, the channel access parameters of the primary channel may change. The channel access parameters of the primary channel may have increased values, decreased values, or initialized values compared to the channel access parameters previously used on the primary channel. As another example, if data transmission on the subchannel fails, the channel access parameters of the primary channel may change based on the channel access parameters of the subchannel. The channel access parameters of the primary channel may have increased values, decreased values, or initialized values compared to the channel access parameters previously used on the primary channel.

## Claims

1. A method for operating an access point (AP) in a wireless LAN system, the method comprising:
detecting that a device other than at least one station (STA) associated with the AP is performing communication on a primary channel;
obtaining information related to a time duration during which the communication is performed;
switching an operating channel from the primary channel to at least one subchannel during the time duration;
transmitting or receiving data on the subchannel; and
switching the operating channel to the primary channel.

2. The method of claim 1, further comprising determining a transmission time point for transmission or reception of the data on the subchannel.

3. The method of claim 2,
wherein the transmission time point is determined based on whether the AP and the at least one STA switch the operating channel.

4. The method of claim 2,
wherein the transmission time point is determined based on a time point at which the at least one STA switches the operating channel..

5. The method of claim 2, wherein the transmitting or receiving comprises performing a channel access procedure for the transmission on the subchannel..

6. The method of claim 4,
wherein if the channel access procedure is completed before the transmission time point, the channel access procedure is repeatedly performed until the transmission time point.

7. The method of claim 1, wherein whether the communication is performed is detected based on an energy amount of a frame used for the communication..

8. The method of claim 1,
wherein information about the time duration is obtained from the STA or is obtained by decoding a frame used for the communication.

9. The method of claim 1,
wherein the switching the operating channel to the primary channel is performed within the time duration.

10. A method for operating a station (STA) in a wireless LAN system, the method comprising:
detecting that a device other than an access point (AP) associated with the STA is performing communication on a primary channel;
obtaining information related to a time duration during which the communication is performed;
switching an operating channel from the primary channel to at least one subchannel during the time duration;
transmitting or receiving data on the subchannel; and
switching the operating channel to the primary channel.

11. The method of claim 10, further comprising determining a transmission time point for transmission or reception of the data on the subchannel.

12. The method of claim 11,
wherein the transmission time point is determined based on whether the STA and the AP switch the operating channel..

13. The method of claim 11,
wherein the transmission time point is determined based on a time point at which the at least one STA switches the operating channel..

14. The method of claim 12, wherein the transmitting or receiving comprises performing a channel access procedure for the transmission on the subchannel..

15. The method of claim 13,
wherein if the channel access procedure is completed before the transmission time point, the channel access procedure is repeatedly performed until the transmission time point.

16. The method of claim 10, wherein whether the communication is performed is detected based on an energy amount of a frame used for the communication..

17. The method of claim 10,
wherein information about the time duration is obtained from the AP or is obtained by decoding a frame used for the communication.

18. The method of claim 10,
wherein the switching the operating channel to the primary channel is performed within the time duration.

19. An access point (AP) in a wireless LAN system, the AP comprising:
a transceiver; and
a processor connected to the transceiver,
wherein the processor is configured to:
detect that a device other than at least one STA (station) associated with the AP is performing communication on a primary channel;
obtain information related to a time duration during which the communication is performed;
switch an operating channel from the primary channel to at least one subchannel during the time duration;
transmit or receiving data on the subchannel; and
switch the operating channel to the primary channel.

20. A station (STA) in a wireless LAN system, the STA comprising:
a transceiver; and
a processor connected to the transceiver,
wherein the processor is configured to:
detect that a device other than an access point (AP) associated with the STA is performing communication on a primary channel;
obtain information related to a time duration during which the communication is performed;
switch an operating channel from the primary channel to at least one subchannel during the time duration;
transmit or receiving data on the subchannel; and
switch the operating channel to the primary channel.
